# FASCICULE DE BREVET EUROPEEN

(11) **EP 1 320 724 B1**
(45) Date de publication et mention de la délivrance du brevet: **07.05.2008**
(21) Numéro de dépôt: 01967431.6
(22) Date de dépôt: 06.09.2001
(51) Int. Cl.: G01D 21/02, G01D 5/20

(54) **CAPTEUR DE DEPLACEMENT ET DE L'EFFORT**
WEG- UND- KRAFTGEBER
DISPLACEMENT AND FORCE SENSOR

(30) Priorité: 15.09.2000 FR 0011837
(43) Date de publication de la demande: 25.06.2003
(73) Titulaire: ROBERT BOSCH GMBH, 70442 Stuttgart (DE)
(72) Inventeur: FOURCADE, Jean, F-77420 Champs sur Marne (FR); GENDRIN, Stéphane, F-35170 Bruz (FR); PASQUET, Thierry, F-93190 Livry Gargan (FR)
(74) Mandataire: Hurwic, Aleksander Wiktor
(86) Numéro de dépôt international: PCT/FR2001/002762
(87) Numéro de publication internationale: WO 2002/023135

(56) Documents cités:
- EP-A- 0 447 017
- EP-A- 0 511 807
- US-A- 5 541 510

## Description

La présente invention concerne un module capteur intégrant la mesure de la course d'une pédale de frein ainsi que la mesure de l'effort exercé sur ladite pédale.

EP-A-0447 017 décrit un dispositif électrique de mesure de déplacement d'éléments coaxiaux.

US-A-5 541 510 décrit la mesure physique, notamment de la distance, à l'aide d'une bobine électrique.

EP-A-0511 807 décrit un dispositif de mesure alimenté électriquement par couplage inductif.

Un amplificateur d'effort ou servomoteur pneumatique d'assistance au freinage comprend une enveloppe rigide constituée de deux coquilles, d'une part le couvercle et d'autre part le cylindre, qui sont serties entre elles. A l'intérieur de l'enveloppe du servomoteur pneumatique d'assistance au freinage, une chambre avant à volume variable est séparée d'une chambre arrière à volume variable par une membrane étanche souple et par une jupe rigide entraînant un piston pneumatique prenant appui par l'intermédiaire d'une tige de commande, sur le piston primaire d'un maître cylindre tandem d'un circuit hydraulique de freinage. La chambre avant dirigée vers le maître cylindre tandem est reliée hydrauliquement à une source de vide alors que la chambre arrière est reliée hydrauliquement, de manière contrôlée par une valve, à une source de fluide propulseur, typiquement de l'air sous pression atmosphérique.

Dans ce type de structure, il convient de pouvoir mesurer l'effort réalisée sur la tige de commande dudit servomoteur pneumatique d'assistance au freinage lors de l'actionnement et de transmettre cette information vers une unité de traitement pour fournir au système de freinage une information d'entrée concernant l'effort exercé sur le frein. Il est également intéressant de pouvoir réaliser ce type de mesure dans un maître-cylindre relié directement à la pédale de frein.

Il convient également de pouvoir déterminer la course de la pédale lors de l'actionnement du frein.

Généralement, on utilise d'une part un capteur d'effort sur la tige de commande et, d'autre part, dans le cas d'un servomoteur on utilise le piston pneumatique comme corps d'épreuve d'un capteur de course à courants de Foucault, dans le cas d'un maître-cylindre on utilise le piston primaire.

Cependant, un capteur de course et un capteur d'effort alourdissent et compliquent la structure du servomoteur pneumatique d'assistance au freinage.

La présente invention a pour but principal de proposer un module de capteur intégrant les deux fonctions, à savoir le capteur d'effort et le capteur de course de freinage, afin de fournir au système de freinage une information d'entrée la plus complète possible, tout en conservant une structure simple et économique du servomoteur pneumatique d'assistance au freinage.

A cet effet, l'invention a pour objet un module capteur comprenant une unité de traitement, un capteur de course et un capteur d'effort et propre à déterminer, au sein du servomoteur pneumatique d'assistance au freinage ou du maître-cylindre associé, une information concernant à la fois l'effort porté sur la pédale de frein en déterminant l'effort exercé sur une tige de mobile axialement et la course de ladite tige en déterminant la position du piston en prise avec la tige, caractérisé en ce qu'il comporte une première bobine électrique fixe entourant ledit piston et ladite tige de commande, ainsi qu'une seconde bobine électrique mobile entourant la tige et reliée au capteur d'effort, lesdites bobines étant coaxiales, une tension oscillatoire induite au sein de ladite bobine fixe générant des courants de Foucault au sein dudit piston permettant la mesure de la course dudit piston par le capteur de course à courants de Foucault utilisant le piston comme corps d'épreuve, et alimentant en énergie le capteur d'effort par l'intermédiaire de la bobine mobile, ladite bobine fixe servant en outre de support à la transmission d'un signal électrique de mesure généré par ledit capteur d'effort.

Ainsi, de manière avantageuse, l'information au niveau du capteur d'effort est réalisée par les deux bobines concentriques et est, donc, une transmission sans fil qui permet de s'affranchir d'une liaison filaire tant pour l'alimentation en énergie du capteur d'effort que pour la récupération du signal de mesure d'effort sur la course de la tige de commande ce qui allège et simplifie la structure. En outre, lesdits constituants de cette transmission sans fil, en particulier la bobine fixe servent également à créer les courants de Foucault au sein du piston primaire pour réaliser la seconde fonction du module capteur selon l'invention.

Avantageusement, le module capteur selon l'invention intègre au sein d'un même module la prise d'information concernant la course de la pédale et la prise d'information concernant l'effort exercée dessus tout en utilisant la même électronique de traitement, la même connectique et la même bobine fixe quelle que soit la fonction voulue: mesure des deux paramètres d'entrée ou mesure de l'un ou de l'autre seul.

De préférence, la course de la tige de commande se situe dans la plage de 40 à 50 mm.

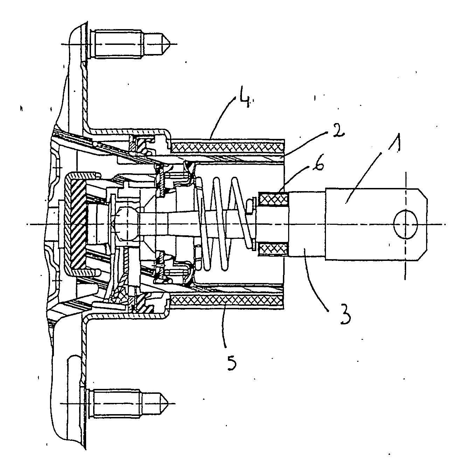

On décrira maintenant plus en détail un exemple de réalisation de l'invention en référence au dessin dans lequel la figure unique représente une vue en coupe partielle d'un servomoteur pneumatique d'assistance au freinage comportant un module capteur selon l'invention.

La tige 1 est mobile axialement en prise avec le corps de piston 2 dans le servomoteur pneumatique d'assistance au freinage. Sur cette tige 1 est monté le capteur d'effort 3.

Cette tige 1 se déplace axialement dans le servo-frein et est entourée d'un manchon 4 dans lequel est logée, entourant ladite tige 1, une première bobine électrique 5, dite bobine fixe.

Sur la tige 1 est montée une seconde bobine électrique 6, dite bobine mobile entourant ladite tige 1 coaxialement à la bobine fixe 5 et reliée au capteur d'effort 3.

La bobine fixe 5 est alimentée en tension sinusoïdale depuis l'unité de traitement U et crée un flux A qui varie dans la bobine mobile 6. Une tension est alors induite aux bornes de ladite bobine mobile 6 qui est reliée au capteur d'effort 3 et l'alimente en tension.

Lorsque le capteur 3 agit, il émet un signal électrique S dans la bobine mobile 6 dont l'amplitude, la fréquence ou le rapport cyclique dépend de l'effort exercé sur la tige 1. Ce signal électrique S est reçu par la bobine fixe 5 qui est reliée à l'unité de traitement U vers laquelle les signaux S sont envoyés.

De préférence, la tige 1 est réalisée en acier et l'entrefer radial entre les deux bobines fixe 5 et mobile 6 est de 0,5 à 2 mm.

De préférence, la bobine fixe 5 est plus longue que la bobine mobile 6 de telle sorte que la tension induite dans la bobine mobile 6 varie moins le long de la course de la tige 1.

La bobine fixe 5 soumise à une tension génère des courants de Foucault F dans le piston primaire 2 afin de mesurer la position dudit piston primaire 2 qui sert de corps d'épreuve au capteur de course à courants de Foucault.

La présente invention s'applique principalement à l'industrie des systèmes de freinage pour véhicules automobiles et notamment pour voitures particulières et en particulier aux servomoteurs pneumatique d'assistance au freinage comprenant un module capteur tel que défini ci-dessus et/ou aux maîtres-cylindres, notamment aux maîtres-cylindres tandem, comprenant un module capteur tel que défini ci-dessus.

## Revendications

1. Module capteur comprenant une unité de traitement, un capteur de course et un capteur d'effort (3) et propre à déterminer, au sein du servomoteur pneumatique d'assistance au freinage associé, une information concernant à la fouis l'effort exercé sur une tige mobile (1) axialement et la course de ladite tige (1) en déterminant la position d'un piston (2) en prise avec la tige (1),
dans lequel module capteur, une première bobine électrique fixe (5) entoure la tige (1) et une tension oscillatoire induite au sein de la bobine fixe (5) génère des courants de Foucault au sein du piston (2) et permet la mesure de la course du piston (2) par le capteur de course à courants de Foucault utilisant le piston (2) comme corps d'épreuve,
**caractérisé en ce que** la première bobine bobine électrique fixe (5) entoure le piston (2), le module capteur comporte une seconde bobine électrique (6) mobile entourant la tige (1) et reliée au capteur d'effort (3), les bobines (5,6) étant coaxiales, et la tension oscillatoire induite alimente en énergie le capteur d'effort (3) par l'intermédiaire de la bobine mobile (6), ladite bobine fixe (5) servant en outre de support à la transmission d'un signal électrique (S) de mesure généré par ledit capteur d'effort (3).

2. Module capteur selon la revendications 1,
**caractérisé en ce que** la bobine fixe (5) est alimentée en tension sinusoïdale depuis l'unité de traitement (U) et crée un flux (A) qui varie dans la bobine mobile (6), induisant une tension aux bornes de ladite bobine mobile (6) qui est reliée au capteur d'effort (3) et l'alimente en tension.

3. Module capteur selon l'une des revendications 1 et 2,
**caractérisé en ce que** l'entrefer radial entre les deux bobines fixe (5) et mobile (6) est de 0,5 à 2 mm.

4. Module capteur selon l'une des revendications 1 à 3,
**caractérisé en ce que** la première bobine ou bobine fixe (5) est plus longue que la seconde bobine ou bobine mobile (6) de telle sorte que la tension induite dans la bobine mobile (6) varie moins le long de la course.

5. Module capteur selon l'une des revendications 1 à 4,
**caractérisé en ce que** la course de la tige de commande (1) se situe dans la plage de 40 à 50 mm.

6. Servomoteur pneumatique d'assistance au freinage,
**caractérisé en ce qu'**il comprend un module capteur selon l'une des revendications 1 à 5.

7. Maître-cylindre, notamment maître-cylindre tandem **caractérisé en ce qu'**il comprend un module capteur selon l'une des revendications 1 à 5.

## Claims

1. Sensor module, comprising a processing unit, a stroke sensor and a force sensor (3), and capable of determining data concerning both the force exerted on an axially-moving rod (1), and the travel of said rod (1), by the determination of the position of a piston (2) coupled to the rod (1), in which sensor module, a first stationary electrical coil (5) is arranged about rod (1) and an induced oscillatory voltage within the stationary coil (5) generates eddy current within piston (2), thus permitting the measurement of the stroke of the piston (2) by means of the eddy current stroke sensor using the piston (2) as test body,
**characterised in that** the first stationary electrical coil (5) is arranged about the piston (2) sensor module comprises a second moving electrical coil (6) disposed about the rod (1) and connected to the force sensor (3), coils (5,6) being coaxial, and the induced oscillatory voltage supplies the force sensor (3) with electrical power through the moving coil (6), said stationary coil (5) being further used as a medium for the transmission of an electrical measurement signal (S), generated by said force sensor (3).

2. Sensor module according to claim 1,
**characterised in that** said stationary coil (5) is supplied with a sinusoidal voltage from the processing unit (U), and generates a flux (A), varying inside the moving coil (6), as a result of which a voltage is induced across said moving coil (6), which is connected to the force sensor (3) for the voltage supply of the latter.

3. Sensor module according to claim 1 or 2,
**characterised in that** the radial air gap between said stationary coil (5) and said moving coil (6) ranges from 0.5 to 2 mm.

4. Sensor module according to any one of claims 1 to 3,
**characterised in that** said first coil or stationary coil (5) is longer than said second coil or moving coil (6), so that the induced voltage in the moving coil (6) may vary to a lesser extent throughout the travel.

5. Sensor module according to any one of claims 1 to 4,
**characterised in that** the stroke of the control rod (1) ranges from 40 to 50 mm.

6. Pneumatic servomotor for an assisted braking,
**characterised in that** it comprises a sensor module according to any one of claims 1 to 5.

7. Master cylinder, more particularly a tandem master cylinder,
**characterised in that** it comprises a sensor module according to any one of claims 1 to 5.

## Patentansprüche

1. Sensormodul, das eine Verarbeitungseinheit, einen Wegsensor und einen Kraftsensor (3) aufweist und dazu geeignet ist, innerhalb des zugeordneten pneumatischen Servomotors zur Bremsunterstützung eine Information zu ermitteln, die sowohl die auf eine axial bewegliche Stange (1) ausgeübte Kraft als auch den Weg der Stange (1) betrifft, indem die Stellung eines Kolbens (2), der mit der Stange (1) in Eingriff ist, bestimmt wird, wobei im Sensormodul eine erste, feststehende elektrische Spule (5) die Stange (1) umgibt und eine innerhalb der feststehenden Spule (5) induzierte oszillierende Spannung Wirbelströme im Kolben (2) erzeugt und unter Verwendung des Kolbens (2) als Prüfkörper die Messung des Wegs des Kolbens (2) mit dem Wirbelstrom-Wegsensor ermöglicht,
**dadurch gekennzeichnet, dass** die erste, feststehende elektrische Spule (5) den Kolben (2) umgibt, wobei das Sensormodul eine zweite, bewegliche elektrische Spule (6) aufweist, die die Stange (1) umgibt und mit dem Kraftsensor (3) verbunden ist, wobei die Spulen (5, 6) koaxial zueinander liegen und die induzierte oszillierende Spannung den Kraftsensor (3) über die bewegliche Spule (6) mit Energie versorgt, wobei die feststehende Spule (5) ferner als Träger für die Übertragung eines elektrischen, vom Kraftsensor (3) erzeugten Messsignals (S) dient.

2. Sensormodul nach Anspruch 1,
**dadurch gekennzeichnet, dass** die feststehende Spule (5) ausgehend von der Verarbeitungseinheit (U) mit einer Sinusspannung versorgt wird und einen Fluss (A) erzeugt, der in der beweglichen Spule (6) variiert, wodurch an den Anschlüssen der beweglichen Spule (6), die mit dem Kraftsensor (3) verbunden ist und diesen mit Spannung versorgt, eine Spannung induziert wird.

3. Sensormodul nach einem der Ansprüche 1 und 2,
**dadurch gekennzeichnet, dass** der radiale Spalt zwischen der feststehenden Spule (5) und der beweglichen Spule (6) zwischen 0,5 und 2mm beträgt.

4. Sensormodul nach einem der Ansprüche 1 bis 3,
**dadurch gekennzeichnet, dass** die erste Spule oder feststehende Spule (5) länger ist als die zweite Spule oder bewegliche Spule (6), so dass die in der beweglichen Spule (6) induzierte Spannung entlang dem Weg weniger variiert.

5. Sensormodul nach einem der Ansprüche 1 bis 4,
**dadurch gekennzeichnet, dass** der Weg der Steuerstange (1) zwischen 40 und 50mm beträgt.

6. Pneumatischer Servomotor zur Bremsunterstützung,
**dadurch gekennzeichnet, dass** er ein Sensormodul nach einem der Ansprüche 1 bis 5 aufweist.

7. Hauptzylinder, insbesondere Tandem-Hauptzylinder,
**dadurch gekennzeichnet, dass** er ein Sensormodul nach einem der Ansprüche 1 bis 5 aufweist.
